# FASCICULE DE BREVET EUROPEEN

(11) **EP 0 890 936 B1**
(45) Date de publication et mention de la délivrance du brevet: **15.09.2004**
(21) Numéro de dépôt: 98490015.9
(22) Date de dépôt: 02.06.1998
(51) Int. Cl.: G08G 1/0968, G08G 1/0967

(54) **Dispositif d'aide au guidage d'un véhicule**
Hilfsvorrichtung für die Führung eines Fahrzeuges
System for assisting the guidance of a vehicle

(30) Priorité: 03.06.1997 FR 9707066
(43) Date de publication de la demande: 13.01.1999
(73) Titulaire: Ekman, Adolphe, 59800 Lille (FR)
(72) Inventeur: Ekman, Adolphe, 59800 Lille (FR)
(74) Mandataire: Hennion, Jean-Claude

(56) Documents cités:
- EP-A- 0 377 480
- EP-A- 0 720 137
- WO-A-96/38319
- WO-A-97/18440
- PATENT ABSTRACTS OF JAPAN vol. 097, no. 009, 30 septembre 1997 & JP 09 120255 A (YAMAZAKI TOSHIO), 6 mai 1997
- PATENT ABSTRACTS OF JAPAN vol. 097, no. 010, 31 octobre 1997 & JP 09 152475 A (KOMIYA KAZUMI), 10 juin 1997

## Description

L'invention se rapporte à une installation d'aide à la conduite d'un véhicule et à la programmation d'itinéraires.

Malgré un développement continu des voies de circulation et l'amélioration des liaisons routières, l'augmentation du trafic routier est telle qu'il se produit de plus en plus d'encombrements et d'accidents.

Les constructeurs automobiles développent sur les véhicules des moyens techniques aptes à minimiser :
- d'une part, le risque d'accident (anti-blocage des roues lors d'un freinage énergique, éclairage plus performant, etc ...) et,
- d'autre part, les conséquence de ces accidents (ceintures de sécurité, habitacle renforcé, etc ...).

Ces dispositions augmentent la sécurité des véhicules mais n'améliorent pas la fluidité de la circulation.

Pour cela, il est connu, lors des départs en vacances, d'émettre via des stations de radiodiffusion des indications sur l'encombrement des routes.

Ces indications sont toutefois très générales, insuffisantes pour parvenir à un contrôle de la circulation et n'apportent au conducteur aucun repère, aucune information sur les niveaux de vitesse conciliables avec sa sécurité.

On connaît également de EP-A-720 137, WO 96 38319 ou JP 09 120255 des systèmes d'aide au déplacement faisant appel :
- d'une part, à des systèmes de localisation du véhicule concerné par référence à la position de satellites géostationnaires et,
- d'autre part, à des cartes routières électroniques qui, enregistrées sur des disques optiques, sont affichées sur un écran que le conducteur peut visualiser avec sur la carte affichée un repère indiquant la position instantanée du véhicule sur la carte.

Malheureusement, toutes ces mesures ne donnent pas entièrement satisfaction et peuvent être source de distraction qui s'additionnent aux autres équipements déjà existants : radio-stéréo, lecteur laser, téléphone, télécopieur.

Un des résultats que l'invention vise à obtenir est une installation d'aide à la conduite d'un véhicule comprenant :
- une station dite de guidage, comprenant des moyens pour émettre des informations vers le véhicule considéré,
- à bord du véhicule, des moyens de réception de ces informations et un moyen pour visualiser les informations reçues à proximité du conducteur,
cette installation comprenant en outre :
- sur le véhicule, au moins à l'avant de celui-ci au moins une caméra filmant en permanence la route qu'emprunte le véhicule et un moyen d'émission hertzienne au moins de l'information acquise par la caméra,
- dans la station de guidage, un moyen de réception de l'information émise par le véhicule,
- un moyen de traitement de l'information reçue au moins par comparaison avec au moins une information dite de référence représentative de la route suivie mémorisée antérieurement et régulièrement réactualisée et
- des moyens de retransmission par la station de guidage vers le véhicule d'informations retraitées comprenant au moins une image synthétisée de la zone filmée par la caméra précitée à laquelle sont ajoutés des paramètres personnalisés d'aide à la conduite, correspondants au véhicule et au conducteur.

L'invention sera bien comprise à l'aide de la description ci-après faite à titre d'exemple non limitatif en regard du dessin ci-annexé qui représente schématiquement :

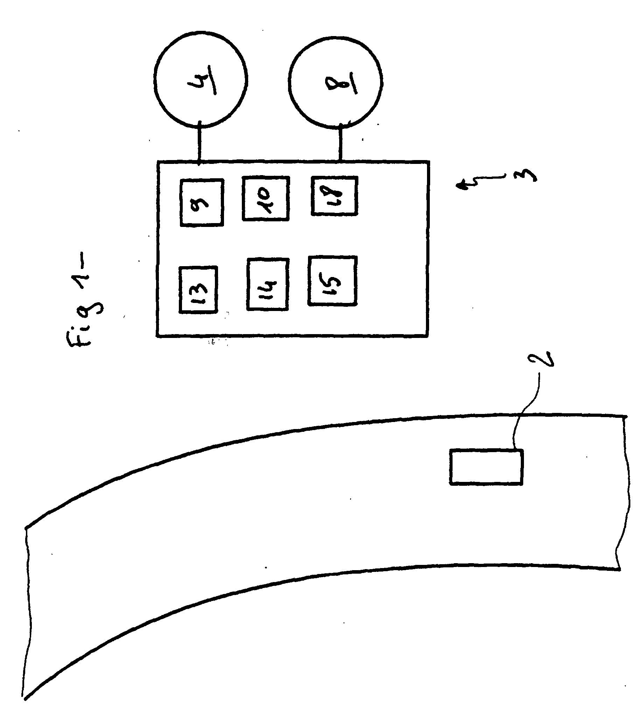

- figure 1 : une installation selon l'invention,

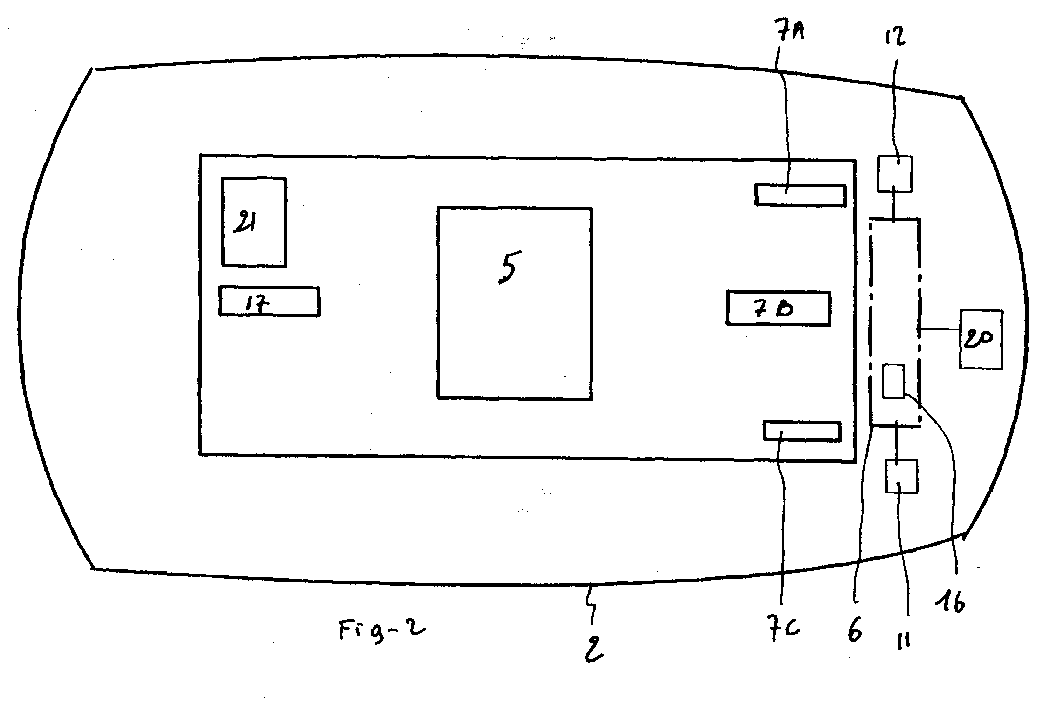

- figure 2 : un véhicule selon l'invention,

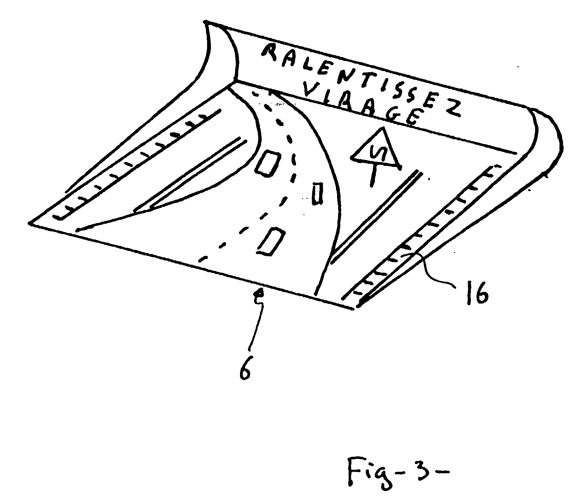

- figure 3 : un détail du véhicule.

En se reportant au dessin, on voit une installation 1 d'aide à la conduite d'un véhicule 2 circulant sur le réseau routier.

Classiquement, cette installation comprend :
- une station 3 dite de guidage comprenant des moyens 4 pour émettre des informations vers le véhicule considéré,
- à bord du véhicule des moyens 5 de réception de ces informations et un moyen 6 pour visualiser les informations reçues à proximité du conducteur.

Selon une caractéristique essentielle de l'invention, l'installation 1 comprend :
- sur le véhicule, au moins à l'avant de celui-ci au moins une caméra 7A, 7B, 7C filmant en permanence la route qu'emprunte le véhicule et un moyen d'émission hertzienne au moins de l'information acquise par la caméra,
- dans la station de guidage, un moyen 8 de réception de l'information émise par le véhicule,
- un moyen 9 de traitement de l'information reçue au moins par comparaison avec au moins une information dite de référence représentative de la route suivie mémorisée antérieurement et régulièrement réactualisée et
- des moyens 10 de retransmission par la station de guidage vers le véhicule d'informations retraitées comprenant au moins une image synthétisée de la zone filmée par la caméra précitée à laquelle sont ajoutés des paramètres personnalisés d'aide à la conduite.

Ainsi, pourront être affichés en surimpression les panneaux de signalisation et les tracés de lignes continues, discontinues et autres inscriptions portées directement sur le revêtement, qui, la nuit, sont beaucoup plus difficiles à voir ou encore l'encombrement de la route en signalant la présence des autres véhicules circulant à l'avant et à l'arrière.

En outre, l'installation comprend :
- un moyen 11 d'identification du véhicule contenant des informations techniques sur les aptitudes routières du véhicule,
- un moyen 12 d'identification du conducteur du véhicule contenant des informations sur les aptitudes à la conduite, les conditions physiques et psychiques du dit conducteur et
dans la station de guidage :
- un moyen 13 pour analyser les informations relatives aux conducteur, véhicules et conditions de circulation et
- un moyen 14 pour calculer, à partir de ces données, les paramètres d'aide à la conduite émis vers le véhicule.

Il peut s'agir d'une vitesse conseillée, d'une demande de ralentissement à l'approche d'un virage ou encore de la présence d'un véhicule à l'arrêt ou venant en sens inverse.

Pourront être affichées des indications signalant que le véhicule considéré roule à une vitesse excessive par rapport aux capacités du véhicule du conducteur et/ou de l'encombrement de la route et/ou des conditions climatiques, par exemple, en temps de pluie, des conditions de visibilité par exemple, à la tombée de la nuit, brouillard, etc ...

Cet avertissement est fait, par exemple par modification de la couleur de l'écran et par un signal sonore lorsque la vitesse dépasse les normes de sécurité.

De préférence, l'installation comprend, dans la station de guidage, un moyen 15 de calcul de la distance d'arrêt du véhicule et un moyen 16 pour présenter graphiquement cette distance d'arrêt sur le moyen de visualisation sur lequel est projetée l'image synthétique émise par la station de guidage.

Le moyen 12 d'identification du conducteur est une carte à mémoire dans laquelle sont stockées notamment des informations sur les capacités réflexes du conducteur spécifique ou encore son acuité visuelle le jour et la nuit, son état de santé et son éventuel traitement médical.

Il en sera de même du moyen d'identification du véhicule de sorte que les informations d'aide à la conduite seront adaptées au conducteur et au véhicule.

Le véhicule dispose en outre d'une seconde caméra 17 filmant la route vue de l'arrière du véhicule ainsi qu'une troisième 7B caméra filmant vers l'avant du véhicule dans l'infrarouge.

Cette vision dans l'infrarouge est particulièrement intéressante la nuit ou par temps de brouillard.

Au delà d'informations concourant à la sécurité, le dispositif peut afficher d'autres informations, plus accessoires, par exemple touristiques, telles la référence de restaurants, d'hôtels ou de lieux géographiques ou historiques à visiter.

La station de guidage comprend au moins une unité 18 de mémorisation dans laquelle sont répertoriées toutes les informations routières utiles telles que les tracés des routes, les vitesses conseillées.

Cette unité de mémorisation sera régulièrement réactualisée par les différents services ayant un rapport avec la circulation.

Le véhicule est équipé d'un moyen 20 permettant d'introduire le lieu de départ et le lieu d'arrivée de manière à faire déterminer un parcours par la station de guidage, ce parcours tenant compte des désirs du conducteur, par exemple, le point de passage obligé pour, par exemple, visiter une ville.

Par ce même moyen 20, le conducteur pourra transmettre ses réponses aux tests proposés par la station de guidage avant le départ afin de ne permettre le déplacement routier qu'au conducteur conscient de ses responsabilités et disposant de ses capacités normales.

Un dispositif 21 de signalisation visuelle, placé à l'arrière du véhicule, pourra en outre signaler au véhicule suiveur que celui-ci est trop près.

La liaison entre la voiture et la station de guidage est, de préférence, une liaison hertzienne numérique codée.

La station de guidage, à la demande du conducteur transmise par ce moyen 20, comprend des moyens pour agir sur l'accélération et la décélération du véhicule qui, ainsi, automatiquement circulera tout au long du trajet à la vitesse conseillée et ce, quelles que soient les circonstances et conditions du parcours.

La station de guidage comprend des moyens pour informer le conducteur sur la durée de conduite continue maximale et la durée de repos minimale afin de maintenir le conducteur dans les meilleures conditions.

Le tableau de bord du véhicule sera équipé d'une caméra en liaison avec la station de guidage qui transmettra intégralement en permanence toutes les informations fournies par les voyants et compteurs installés par le constructeur à la vue du conducteur.

La présente invention apporte donc, en solution globale, une aide permanente au conducteur tout au long de son trajet, sous forme de visualisation sur un écran disposé au tableau de bord dans son angle de vision du panorama stylisé, avant et arrière de son véhicule en déplacement comportant toutes les informations et conseils nécessaires à sa sécurité et à la programmation de ses déplacements routiers, toutes ces informations visuelles étant complétées par des informations vocales.

Ainsi, il s'agit de la mise à disposition de tout conducteur par l'intermédiaire de la liaison hertzienne permanente, aller-retour, image-son entre la station de guidage et le véhicule, de l'intelligence artificielle de la dite station de guidage qui dispose d'énormes possibilités de stockage et d'accès instantané d'informations routières, mémorisées, réactualisées, en temps réel, caractérisant l'itinéraire demandé par le conducteur utilisateur, auxquelles s'ajoutent les informations sur les circonstances et conditions de circulation sous forme de l'image réelle de la route prise par des caméras disposées dans le véhicule en déplacement, correctement orientées filmant et transmettant à la station de guidage le panorama défilant à l'avant et à l'arrière du véhicule et par analyses, intégrations de tous les paramètres intervenant, la dite station de guidage calculant et retransmettant par liaison hertzienne, directement sur l'écran disposé au tableau de bord, dans l'angle de vision du conducteur, la même image du trajet mais stylisée et porteuse de toutes les informations utiles pour circuler en toutes circonstances et en toute sécurité.

## Revendications

1. Installation d'aide à la conduite d'un véhicule comprenant :
- une station (3) dite de guidage comprenant des moyens (4) pour émettre des informations vers le véhicule considéré,
- à bord du véhicule des moyens (5) de réception de ces informations et un moyen (6) pour visualiser les informations reçues à proximité du conducteur,
cette installation comprenant en outre :
- sur le véhicule :
- au moins à l'avant de celui-ci au moins une caméra (7A, 7B, 7C) filmant en permanence la route qu'emprunte le véhicule et un moyen d'émission hertzienne au moins de l'information acquise par la caméra,
- un moyen (11) d'identification du véhicule contenant des informations techniques sur les aptitudes routières du véhicule,
- un moyen (12) d'identification du conducteur du véhicule contenant des informations sur les aptitudes à la conduite, les conditions physiques et psychiques du dit conducteur et
- dans la station de guidage,
- un moyen (8) de réception de l'information émise par le véhicule,
- un moyen (9) de traitement de l'information reçue au moins par comparaison avec au moins une information dite de référence représentative de la route suivie mémorisée antérieurement et régulièrement réactualisée et
- des moyens (10) de retransmission par la station de guidage vers le véhicule d'informations retraitées comprenant au moins une image synthétisée de la zone filmée par la caméra précitée à laquelle sont ajoutés des paramètres personnalisés d'aide à la conduite correspondants au véhicule et au conducteur.

2. Installation selon la revendication 1 **caractérisée en ce qu'**elle comprend : dans la station de guidage :
- un moyen (13) pour analyser les informations relatives aux conducteur, véhicules et conditions de circulation et
- un moyen (14) pour calculer, à partir de ces données, les paramètres d'aide à la conduite émis vers le véhicule.

3. Installation selon la revendication 1 **caractérisée en ce qu'**elle comprend, dans la station de guidage, un moyen (15) de calcul de la distance d'arrêt du véhicule et un moyen (16) pour présenter graphiquement cette distance d'arrêt sur le moyen de visualisation sur lequel est projetée l'image synthétique émise par la station de guidage.

4. Installation selon la revendication 2 **caractérisée en ce que** le moyen (12) d'identification du conducteur est une carte à mémoire dans laquelle sont stockées notamment des informations sur les capacités réflexes du conducteur spécifique ou encore son acuité visuelle le jour et la nuit, son état de santé et son éventuel traitement médical en cours.

5. Installation selon la revendication 1 **caractérisée en ce que** le véhicule dispose d'une seconde caméra (17) filmant la route vue de l'arrière du véhicule ainsi qu'une troisième (7B) caméra filmant vers l'avant du véhicule dans l'infrarouge.

6. Installation selon la revendication 1 **caractérisée en ce que** la station de guidage comprend au moins une unité (18) de mémorisation dans laquelle sont répertoriées toutes les informations routières utiles.

7. Installation selon la revendication 1 **caractérisée en ce que** le véhicule est équipé d'un moyen (20) permettant d'introduire le lieu de départ et le lieu d'arrivée de manière à faire déterminer un parcours programmé par la station de guidage suivant les goûts du conducteur.

8. Installation selon la revendication 1 **caractérisée en ce qu'**elle comprend un dispositif (21) de signalisation visuelle, placé à l'arrière du véhicule, signalant au véhicule suiveur que celui-ci est trop près.

9. Installation selon la revendication 1 **caractérisée en ce que** la liaison entre la voiture et la station de guidage est une liaison hertzienne numérique codée.

10. Installation selon la revendication 1 **caractérisée en ce que** la station de guidage transmet par l'intermédiaire de l'écran les indications de changement de direction suivant l'itinéraire préalablement sélectionné par le conducteur.

11. Installation selon la revendication 1 **caractérisée en ce que** la station de guidage transmet par l'intermédiaire de l'écran les informations quant à la durée de conduite maximale et à la durée de repos minimale.

12. Installation selon la revendication 1 **caractérisée en ce que** la station de guidage comprend des moyens pour agir automatiquement sur l'accélération et la décélération du véhicule pour le maintenir dans les limites des vitesses conseillées tout au long de l'itinéraire.

13. Installation selon la revendication 1 **caractérisée en ce que** la station de guidage comprend des moyens pour tester, avant le départ, par questions réponses, le conducteur afin de s'assurer qu'il est en conditions normales pour conduire son véhicule.

14. Installation selon la revendication 1 **caractérisée en ce que** le tableau de bord est équipé d'une caméra qui transmet intégralement toutes les informations fournies par les voyants et compteurs installés par le constructeur.

## Patentansprüche

1. Hilfsvorrichtung zum Führen eines Fahrzeugs, die Folgendes enthält:
― eine so genannte Lenkstation (3), die Mittel (4) enthält, um Informationen an das entsprechende Fahrzeug zu senden;
― an Bord des Fahrzeugs Mittel (5) zum Empfang dieser Informationen und ein Mittel (6) zur Anzeige der erhaltenen Informationen in Nähe des Fahrers.
Außerdem enthält diese Vorrichtung:
― am Fahrzeug:
- mindestens vordem Fahrzeug mindestens eine Kamera (7A, 7B, 7C), die ständig den Weg erfasst, den das Fahrzeug zurücklegt, und ein Mittel zur Aussendung von Funkwellen mindestens für die von der Kamera erfassten Informationen,
- ein Mittel (11) zur Identifikation des Fahrzeugs mittels technischer Informationen über das Fahrverhalten des Fahrzeugs,
- ein Mittel (12) zur Identifikation des Fahrzeugführers mittels Informationen über das Fahrverhalten und den physischen und psychischen Zustand dieses Fahrers sowie
― in der Lenkstation:
- ein Mittel (8) zum Empfang von Informationen, die vom Fahrzeug gesendet werden,
- ein Mittel (9) zur Verarbeitung von Informationen, die mindestens im Vergleich mit mindestens einer Information erhalten wurden, der so genannten Bezugsinformation, die als repräsentativ für den zurückgelegten Weg gespeichert wurde und die regelmäßig aktualisiert wird, sowie
- Mittel (10) zur Rückübertragung der verarbeiteten Informationen von der Lenkstation an das Fahrzeug mit mindestens einem zusammengesetzten Bild der von der o. g. Kamera aufgenommenen Zone, dem personalisierte Hilfsparameter zum Fahrverhalten des Fahrzeugs und des Fahrers hinzugefügt werden.

2. Vorrichtung gemäß Patentanspruch 1, **dadurch gekennzeichnet, dass** sie Folgendes enthält:
in der Lenkstation:
- ein Mittel (13) zur Analyse der Informationen über den Fahrer, die Fahrzeuge und die Verkehrsbedingungen sowie
- ein Mittel (14) zur Berechnung der Hilfsparameter zur Fahrzeugführung auf Grundlage dieser Daten, die an der Fahrzeug gesendet werden.

3. Vorrichtung gemäß Patentanspruch 1, **dadurch gekennzeichnet, dass** sie in der Lenkstation ein Mittel (15) zur Berechnung des Anhalteweges des Fahrzeugs enthält sowie ein Mittel (16) zur grafischen Darstellung dieses Anhalteweges auf dem Visualisierungsmittel, auf welches das von der Lenkstation gesendete zusammengesetzte Bild projiziert wird.

4. Vorrichtung gemäß Patentanspruch 2, **dadurch gekennzeichnet, dass** das Mittel (12) zur Identifikation des Fahrers eine Speicherkarte ist, aufder vor allem Informationen über das Reaktionsvermögen des betreffenden Fahrers gespeichert sind, außerdem Informationen über seine Sehschärfe bei Tag und bei Nacht, seinen Gesundheitszustand und über eventuelle laufende medizinische Behandlungen.

5. Vorrichtung gemäß Patentanspruch 1, **dadurch gekennzeichnet, dass** das Fahrzeug über eine zweite Kamera (17) verfügt, die den Weg hinter dem Fahrzeug aufnimmt, sowie über eine dritte (7B) Kamera, die vor dem Fahrzeug mit Infrarot aufzeichnet.

6. Vorrichtung gemäß Patentanspruch 1, **dadurch gekennzeichnet, dass** die Lenkstation mindestens ein Gerät (18) zur Speicherung enthält, in dem sämtliche relevante Wegeinformationen gespeichert sind.

7. Vorrichtung gemäß Patentanspruch 1, **dadurch gekennzeichnet, dass** das Fahrzeug mit einem Mittel (20) ausgestattet ist, mit dem Abfahrt- und Ankunftsort so eingegeben werden können, dass durch die Lenkstation eine programmierte Strecke nach dem Geschmack des Fahrers festgelegt werden kann.

8. Vorrichtung gemäß Patentanspruch 1, **dadurch gekennzeichnet, dass** sie eine Vorrichtung (21) zur optischen Anzeige enthält, die sich hinter dem Fahrzeug befindet und dem nachfolgenden Fahrer signalisiert, dass er zu dicht auffährt.

9. Vorrichtung gemäß Patentanspruch 1, **dadurch gekennzeichnet, dass** die Verbindung zwischen dem Fahrzeug und der Lenkstation eine Funkverbindung mit numerischem Code ist.

10. Vorrichtung gemäß Patentanspruch 1, **dadurch gekennzeichnet, dass** die Lenkstation über den Bildschirm jede Richtungsänderung von dem vorher durch den Fahrer gewählten Weg überträgt.

11. Vorrichtung gemäß Patentanspruch 1, **dadurch gekennzeichnet, dass** die Lenkstation über den Bildschirm die Informationen zur maximalen Fahrzeit und zur Mindestruhezeit überträgt.

12. Vorrichtung gemäß Patentanspruch 1, **dadurch gekennzeichnet, dass** die Lenkstation Mittel enthält, um automatisch auf die Beschleunigung und Abbremsung des Fahrzeugs zu reagieren, damit die empfohlenen Geschwindigkeitsgrenzen über den gesamten Weg eingehalten werden.

13. Vorrichtung gemäß Patentanspruch 1, **dadurch gekennzeichnet, dass** die Lenkstation Mittel enthält, um vor der Abfahrt mit Fragen und Antworten den Fahrer zu prüfen, ob er in einem normalen Zustand ist, um sein Fahrzeug zu führen.

14. Vorrichtung gemäß Patentanspruch 1, **dadurch gekennzeichnet, dass** die Instrumententafel mit einer Kamera ausgestattet ist, die sämtliche Informationen überträgt, die von den vom Hersteller eingebauten Anzeigegeräten und Zählwerken geliefert werden.

## Claims

1. Installation to assist the driving of a vehicle including :
- a so-called "guidance station" (3) including means (4) for transmitting information to the vehicle considered,
- aboard the vehicle, means (5) for receiving this information and a means (6) for viewing the information received located nearby the driver,
this installation also includes :
- on the vehicle :
- at least in front of this vehicle at least one camera (7A, 7B, 7C) constantly filming the road which the vehicle is taking and a means of terrestrial transmission at least of the information captured by the camera,
- a means (11) of identification of the vehicle containing technical information on the vehicle's road abilities,
- a means (12) of identification of the driver of the vehicle containing information on the driving abilities, the physical and psychological conditions of said driver and
- in the guidance station,
- a means (8) for receiving information transmitted by the vehicle,
- a means (9) for processing the information received at least compared with at least a so-called reference information representing the road being taken which was stored earlier and updated regularly and
- means (10) for retransmission by the guidance station to the vehicle of reprocessed information including at least a synthetic image of the zone filmed by the above-mentioned camera to which are added personalised driving-assistance parameters corresponding to the vehicle and the driver.

2. Installation in accordance with claim 1 **characterised in that** it includes :
in the guidance station :
- a means (13) for analysing the information relating to the driver, vehicles and driving conditions and
- a means ( 14) to calculate, on the basis of this data, the driving assistance parameters transmitted to the vehicle.

3. Installation in accordance with claim 1 **characterised in that** it includes, in the guidance station, a means (15) for calculating the braking distance of the vehicle and a means (16) for graphically presenting this braking distance on the viewing means onto which is projected the synthetic image transmitted by the guidance station.

4. Installation in accordance with claim 2 **characterised in that** the means (12) of identification ofthe driver is a smart card in which is stored notably information on the reflex abilities of the specific driver or his daytime and night-time visual acuity, his state of health and any current medical treatment.

5. Installation in accordance with claim 1 **characterised in that** the vehicle has a second camera (17) filing the road as seen behind the vehicle as well as a third (7B) camera filming ahead of the vehicle in infrared.

6. Installation in accordance with claim 1 **characterised in that** the guidance station includes at least one memory unit (18) in which are stored all useful road information.

7. Installation in accordance with claim 1 **characterised in that** the vehicle is equipped with a means (20) making it possible to introduce the place of department and the destination so as to have a route programmed by the guidance station in accordance with the driver's preferences.

8. Installation in accordance with claim 1 **characterised in that** it includes a visual signalling system (21) placed at the rear of the vehicle, signalling to the following vehicle that it is too close.

9. Installation in accordance with claim 1 **characterised in that** the link between the vehicle and the guidance station is a coded digital terrestrial link.

10. Installation in accordance with claim 1 **characterised in that** the guidance station transmits via the screen indications for changing direction according to the itinerary selected earlier by the driver.

11. Installation in accordance with claim 1 **characterised in that** the guidance station transmits via the screen information on the maximum driving time and the minimum rest time.

12. Installation in accordance with claim 1 **characterised in that** the guidance station includes means for acting automatically on the acceleration and deceleration of the vehicle so as to maintain it within the recommended speed limits throughout the journey.

13. Installation in accordance with claim 1 **characterised in that** the guidance station includes means for testing, before departure, by questions and answers, the driver in order to make sure that he is in a normal state for driving his vehicle.

14. Installation in accordance with claim 1 **characterised in that** the dashboard is equipped with a camera which transmits in full all of the information provided by the indicator lights and meters installed by the manufacturer.
